# EUROPEAN PATENT APPLICATION

(11) **EP 3 070 060 A1**
(43) Date of publication of application: **21.09.2016**
(21) Application number: 13897220.3
(22) Date of filing: 24.12.2013
(51) Int. Cl.: C03B 23/24, C03B 27/00

(54) **METHOD FOR MANUFACTURING TEMPERED VACUUMED GLASS**

(30) Priority: 11.11.2013 CN 201310556629
(71) Applicant: Qingdao Hengda Glass Technology Co. Ltd., Qingdao, Shandong 266426 (CN)
(72) Inventor: WANG, Hui, QingDao Shandong 266426 (CN); XU, Zhiwu, QingDao Shandong 266426 (CN); HUA, Shan, QingDao Shandong 266426 (CN); LIU, Chengwei, QingDao Shandong 266426 (CN)
(74) Representative: RGTH
(86) International application number: PCT/CN2013/090313
(87) International publication number: WO 2015/066957

(57) **Abstract**

A method for manufacturing a tempered vacuumed glass, comprising: manufacturing of a support point (2), and, over-tempering treatment, compounding, sealing, and vacuuming of plate glasses (4 and 7), a total of five steps, among which, in the sealing step, a lead-free low-melting point glass powder containing a shortwave infrared-absorbing material is applied around a gap (3) between two sheets of over-tempered glasses (4 and 7) that are joined together, which are then introduced into an edge-sealing furnace to melt the lead-free low-melting point glass powder containing the shortwave infrared-absorbing material by means of employing a shortwave infrared for heating, thus sealing the gap (3) between the two sheets of over-tempered glasses (4 and 7) that are joined together. Employment of the method allows for a shortened time during which the tempered vacuumed glass is heated in the edge-sealing process, while ensuring the tempered strength of the glass.

## Description

### TECHNICAL FIELD

The present invention relates to the technical field of manufacturing vacuum glass, more particularly, to a method for manufacturing tempered vacuum glass.

### BACKGROUND

Vacuum glass is made of two sheets of plate glasses, in which all of the side edges of the two glasses are sealed, the gap between the two glasses is evacuated into vacuum, and the pumping hole is sealed. Since the two sheets of plate glasses which constitute the vacuum glass are thin, supporting points are usually provided between the two sheets of plate glasses to support the glass against the outside atmospheric pressure, so as to balance the internal and external pressures of the vacuum glass, which operates in a similar manner as heat-insulating in vacuum bottles.

Typically, tempered glasses are used as the two sheets of plate glasses constituting the vacuum glass. During the process of sealing the side edges of the two sheets of tempered glasses, lead-free low-melting glass powder is applied and heated with long-wave infrared to melt the lead-free low-melting glass powder, so as to seal the gap between the two sheets of tempered glasses. However, since glass has a high absorption rate for long-wave infrared, the above heating process may allow the surface temperature of the tempered glasses to reach the annealing temperature of the tempered glass so that the tempered glasses may be annealed into common glass. In order to control the surface temperature of the tempered glass to be lower than the annealing temperature of the tempered glass, the heating time for heating the lead-free low-melting glass powder is about 12 hours, and if the heating time is too long, the production efficiency for vacuum glass may be low.

### SUMMARY

In view of the above problems, the present invention provides a method for manufacturing tempered vacuum glass, to shorten the time for sealing the side edges of the tempered glasses, without annealing the tempered glasses.

The present invention provides a method for manufacturing a tempered vacuum glass, the method comprising the following steps:
1) providing supporting points: forming supporting points on a surface of a plate glass by printing process, and curing the supporting points;
2) over-tempering plate glasses: transferring plate glasses, which are used for manufacturing the tempered vacuum glass, into a continuous tempering furnace for an over-tempering process, so as to form over-tempered glasses;
3) bonding: bonding an over-tempered glass provided with no supporting point but with a pumping hole to a surface of another over-tempered glass on which surface the supporting points are provided;
4) sealing: coating all side edges of a gap between two over-tempered glasses mentioned-above, which are combined with each other, with lead-free low-melting glass powder which contains material that absorbs short-wave infrared, and thereafter, transferring the two over-tempered glasses into an edge-sealing furnace to melt the lead-free low-melting glass powder by short-wave infrared heating, so as to seal the gap between the two over-tempered glasses; meanwhile, in a process of the short-wave infrared heating, the two over-tempered glasses are transformed into tempered glasses;
5) evacuating: baking and vacuumizing a sealed gap between two said tempered glasses using an evacuating device to form the tempered vacuum glass, and then sealing the pumping hole on the tempered vacuum glass.

The present invention has the following advantages:
1. Can guarantee the toughening degree of the tempered glass.
2. Can shorten the edge sealing time for the tempered glass and improve the production efficiency of the vacuum glass.
3. The application of the lead-free glass powder enables the final product to be eco-friendly and non-toxic, and its low melting temperature also enables low energy consumption and high efficiency of the production.
4. The application of evaporable getter can effectively improve the service life of the product and the transparency of the glass.
5. The supporting points on the glass are formed by screen printing process, which can improve the production efficiency and the automation level, and can be used for mass production; in addition, the thickness of the vacuum layer is also easier to adjust.

In order to achieve the above and related objectives, one or more aspects of the present invention comprise the features described in the detailed description and specified in the claims hereinafter. The following description and the attached drawings illustrate some exemplified aspects of the present invention. However, these aspects only represent some of the various ways in which the principles of the present invention can be utilized. Additionally, the present invention is intended to include all these aspects and their equivalents.

### BRIEF DESCRIPTION OF THE DRAWINGS

Other objectives and results will become more clear and comprehensible with reference to the detailed description in connection with the drawings and the contents of the claims with a more complete understanding for the present invention. In the drawings:
- Fig. 1: is a flowchart showing the manufacturing process of the tempered vacuum glass according to an embodiment of the present invention;
- Fig. 2: is a structural schematic of the tempered vacuum glass according to an embodiment of the present invention;
- Fig. 3: is a sectional view taken along A-A line in Fig. 2;
- Fig. 4: is an enlarged view of a part of Fig. 3;
- Fig. 5: is a sectional view taken along B-B line in Fig. 4;

The referential numbers comprise: 1-sealed edge, 2-supporting point, 3-gap, 4-plate glass, 5-pumping hole, 6-evaporable getter, 7-plate glass, and 8-sealed hole.

Throughout these drawings, the same numerals indicate similar or corresponding features or functions.

### DETAILED DESCRIPTION OF EMBODIMENTS

In the following description, for the purpose of illustration, numerous specific details are set forth to provide a complete understanding for one or more embodiments. However, apparently, these embodiments may also be implemented without these specific details.

It should be understood that, a plate glass itself becomes a tempered glass or over-tempered glass after tempering or over-tempering. In fact, the plate glass, the tempered glass and the over-tempered glass are the names used to indicate the same sheet of glass in different processes. Therefore, for convenience of illustration, the plate glass, the tempered glass and the over-tempered glass are indicated by the same referential number in the following description of the present invention.

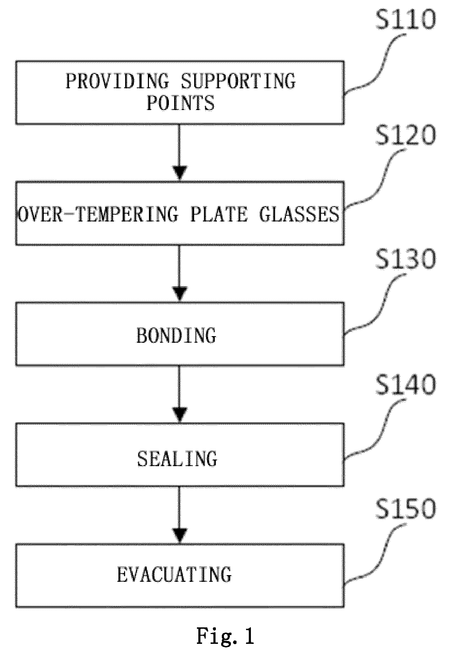

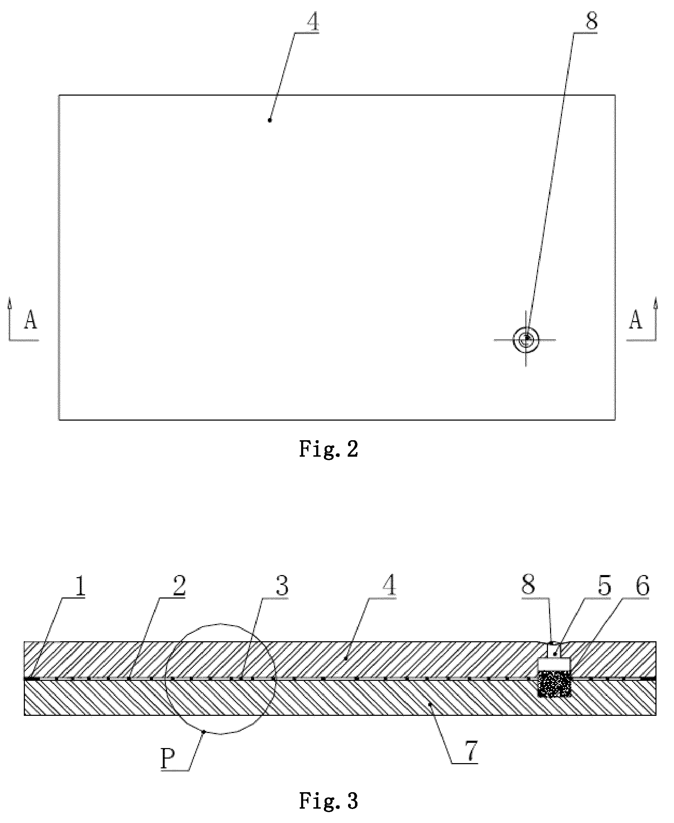

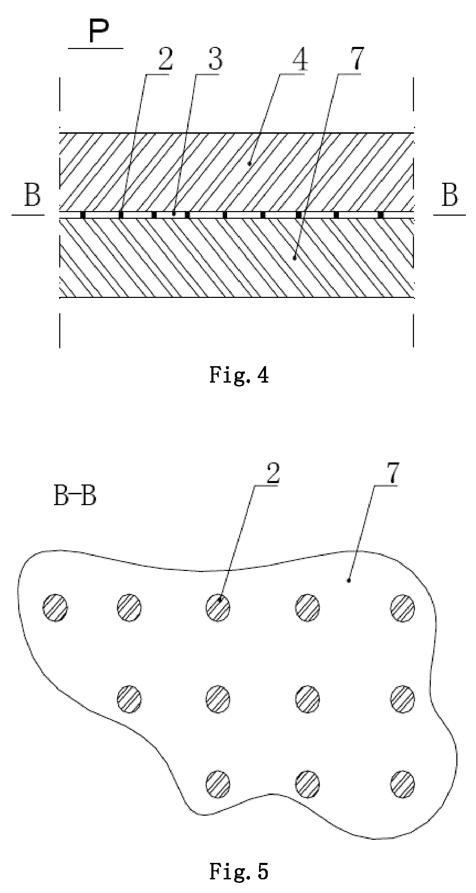

Fig. 1 illustrates the manufacturing process of the tempered vacuum glass according to the present invention, and Figs. 2-5 illustrate the structure of the tempered vacuum glass according to embodiments of the present invention.

As illustrated in Figs. 1-5, the present invention provides a method for manufacturing the tempered vacuum glass, comprising the following steps:
S110: providing supporting points
Form supporting points on a surface of a plate glass 7 by printing or dispensing process, and cure the supporting points. Particularly, heat-resistant glass glaze containing no lead or cadmium is printed uniformly and dispersedly onto the surface of the over-tempered glass through screen printing process, so as to form supporting points with designated height and area.

In the process of providing the supporting points, supporting points 2 are provided on the surface of at least one plate glass, and the heat-resistant glass glaze containing no lead or cadmium is printed uniformly and dispersedly on the upper surface of the plate glass 7 through screen printing process to form the supporting points 2.

Wherein, the heat-resistant glass glaze can resist the temperature of 580°C or more, and has a color near to that of the glass body as well as a good transmittance of light.

The supporting points in the prior art usually use metal support, which has a good conductivity of heat, and is significantly visible and easily movable. In the present invention, ceramic, glass, ink or other inorganic non-metal materials, which has a low conductivity of heat, are used as the supporting points; through spraying, dispensing, printing or other coating processes, the supporting points are directly joined together with the glass and hardly move; and the inorganic non-metal materials used are transparent or semi-transparent, which provides a good visual effect.

After forming the supporting points 2 through printing, curing is required for the printed supporting points. Particularly, the plate glass 7 formed with supporting points 2 is naturally dried in the air or dried in a drying furnace to form supporting points 2 having designated height and area. Typically, the supporting points 2 can be fixed onto the plate glass 7 only if naturally dried in the air for one hour or more, or dried in the drying furnace at the temperature of 120°C for about 15 minutes.

S120: over-tempering the plate glasses
The plate glass 7 used for manufacturing the tempered vacuum glass is transferred into a continuous tempering furnace for an over-tempering process, so as to form the over-tempered glass.

The specific details of the over-tempering process are set forth as follows:

### a. the phase of starting heating

From the room-temperature atmosphere, the plate glass 7 is transferred into the tempering furnace to be heated. Since glass is not a good conductor for heat, the inner layer has a relatively low temperature and the outer layer has a relatively high temperature, the outer layer expands but the inner layer doesn't. Thus, compressive stress is temporarily formed in the surface because the expansion of the outer layer is limited by the inner layer, and tensile stress is formed in the central layer. Since glass has a good compression strength, the glass doesn't break even being subjected to quick heating.

However, it should be noticed that, once the plate glass 7 is transferred into the furnace, stresses are formed in the inner and outer layers of the glass because of the temperature difference between the inner and outer layers. Therefore, suitably for thick glass, the heating process should be a little slower and the heating temperature should be a little lower, otherwise, the plate glass 7 would break in the tempering furnace because of too big temperature difference between the inner and outer layers.

### b. the phase of continuing heating

The plate glass 7 goes on being heated. The temperature difference between the inner and outer layers of the plate glass 7 continues to decrease. When the temperatures of the inner and outer layers reach the tempering temperature, stop the heating process.

### c. the phase of starting quenching

The plate glass 7 is transferred from the tempering furnace into the air grid to be blown. In this way, the temperature of the surface layer drops lower than the temperature of the central layer, and the surface layer starts to shrink but the central layer doesn't, therefore, the shrinkage of the surface layer is limited by the central layer, and tensile stress is formed temporarily in the surface layer and compressive stress is formed in the central layer.

### d. the phase of continuing quenching

The inner and outer layers of the plate glass 7 are being further quenched, and the surface layer of the plate glass 7 has been hardened and stopped shrinking. At this time, the inner layer starts to cool and shrink while the hardened surface layer limits the shrinkage of the inner layer. As a result, compressive stress is formed in the surface layer and tensile stress is formed in the inner layer.

### e. continuing quenching

The temperatures of the inner and outer layers of the plate glass 7 are further lowered. At this time, the compressive stress of the outer layer and the tensile stress of the inner layer have been substantially formed, but meanwhile, the central layer is still relatively soft and more or less in a state of viscous flow, and obviously, it is still not the desired final stress state.

### f. over-tempering completed

At this time, the inner and outer layers of the plate glass 7 have been totally tempered, the temperature difference between the inner and outer layers is reduced, and the desired final stress of the plate glass 7, that is, the compressive stress in the outer layer (surface layer) and the tensile stress in the inner layer, is formed. The plate glass is transformed into the over-tempered glass.

In order to lower the spontaneous breakage rate of the over-tempered glass and raise the surface stress of the over-tempered glass, the over-tempered glass is required to be transferred into a homogenizing furnace for heat soak test (HST). The heat soak test for the over-tempered glass is especially important, because the over-tempered glass will be finally transformed into the tempered glass which has a high spontaneous breakage rate.

Particularly, the over-tempered glass 7 provided with the supporting points 2 is transferred into the homogenizing furnace for the heat soak test. Through convection heating in the homogenizing furnace, hot air flows parallel to the surface of the over-tempered glass 7 without impediments caused by breakage of the tempered glass, wherein the heat soak test includes three phases of temperature rising, temperature keeping and cooling.

The phase of temperature rising starts at the atmospheric temperature of the over-tempered glass 7, and ends when the surface temperature of the tempered glass 7 reaches the temperature of 280°C. The temperature in the furnace may rise over 300°C, and the temperature of the surface of the glass should be kept below 320°C, and the time in which the surface temperature of the glass is over 300°C should be reduced as short as possible.

The phase of temperature keeping starts at the time when the surface temperature of the over-tempered glass 7 reaches 280°C, and lasts at least two hours. Throughout the phase of temperature keeping, the surface temperature of the glass should be kept within 290°C±10°C.

After the phase of temperature keeping is completed, the phase of cooling starts. In the phase of cooling, the temperature of the tempered glass 7 is lowered to the atmospheric temperature. The phase of cooling can be considered as finished when the temperature inside the furnace is lowered to 70°C. During the phase of cooling, the rate of temperature falling should be controlled to minimize breakage of glass caused by thermal stress.

Over-tempering process is a preparation process for sealing the two tempered glasses so as to form the vacuum glass. Generally speaking, the surface stress of the tempered glass without being subjected to HST is over 90 MPa, and the surface stress of the tempered glass subjected to HST in the prior art is considerably lower than 90 MPa. In contrast, in the present invention, due to the over-tempering process, the surface stress of the formed over-tempered glass is in the range of 110 MPa ~130 MPa. Thus, after being subjected to HST of the present invention, although the surface stress is a little decreased, the associated tempering parameters thereof are still slightly higher than common tempered glass, which can meet requirements of being heated again in the subsequent sealing process.

The over-tempered glass 4 provided with a pumping hole is also manufactured through above processes. If there are differences between the properties of the two over-tempered glasses, usually, the over-tempered glass provided with pumping hole 5 is cheaper than the other one, and the pumping hole 5 of the over-tempered glass 4 is inserted with a glass tube for pumping (not shown in the drawings).

S130: bonding
After the supporting points 2 are provided, bond the over-tempered glass provided with no supporting point 2 onto the surface of the other over-tempered glass on which surface the supporting points are provided; wherein the over-tempered glass with no supporting point is provided with the pumping hole, for vacuumizing the sealed gap after sealing.

Particularly, for example, cover a side of the over-tempered glass 7 provided with the supporting points 2, with the over-tempered glass 4 having the pumping hole 5.

Of course, the pumping hole may also be provided on the over-tempered glass provided with the supporting points (further, supporting points 2 may be provided on both of the two over-tempered glasses), however, the over-tempered glass provided with supporting points 2 has a fabrication cost higher than that of the over-tempered glass with no supporting point 2. Considering the material loss in production, desirably, pumping hole is provided on the over-tempered glass with no supporting point 2.

In order to improve the transparency and vacuum property of the tempered vacuum glass, in one particular embodiment of the present invention, at least one piece of evaporable getter 6 is provided at the corners of the two tempered glasses. The evaporable getter is barium-aluminium getter, which not only has a good absorption rate but also can improve the transparency of the glass.

S140: sealing
Coat all the side edges of the gap between the two over-tempered glasses, which are combined with each other, with lead-free low-melting glass powder which contains material that absorbs short-wave infrared, and then transfer the glasses into the edge-sealing furnace to melt the lead-free low-melting glass powder by short-wave infrared heating, so as to seal the gap between the two over-tempered glasses.

Particularly, for example, coat all the side edges of the gap of the two bonded over-tempered glasses and the portion around the pumping hole with lead-free low-melting glass powder which contains material that absorbs short-wave infrared, and then transfer the glasses into the edge-sealing furnace to be heated. When it is heated to 430°C, the lead-free low-melting glass powder starts to melt. When the lead-free low-melting glass powder is totally molten, start to keep the temperature for 2 minutes, and then the sealed edges 1 and the sealed hole 8 are formed.

Wherein, the main composition of the lead-free low-melting glass powder which contains material that absorbs short-wave infrared is as follows:

| Component | ACGIH |
|---|---|
| Zinc oxide | 2 mg/m³ TWA |
| Bismuth oxide | 10 mg/m³ TWA |
| Aluminium oxide | 10 mg/m³ TWA |
| Magnesium oxide | 10 mg/m³ TWA |

Wherein, ACGIH and TWA represent two American environmental hygiene departments, and the lead-free low-melting glass powder used in the embodiment can meet the international standard and doesn't pollute the environment.

The expansion coefficient of the lead-free low-melting glass powder used in the embodiment is in the range of 70~99, and the lowest melting temperature of the lead-free low-melting glass powder is 430°C.

Since glass has a low absorption rate for short wave infrared, the lead-free low-melting glass powder is doped with material that absorbs short-wave infrared, which helps to reach faster to the melting temperature of the lead-free low-melting glass powder, such that the lead-free low-melting glass powder melts quickly and the time for heating the lead-free low-melting glass powder is shortened.

According to empirical operational practice, in the prior art, the time for heating the lead-free low-melting glass powder with long-wave infrared is about 12 hours, and in contrast, in the present invention, the time for heating the lead-free low-melting glass powder with short-wave infrared is about 15 minutes. It can been seen from the fact that, the edge-sealing material used in the present invention can significantly shorten the edge-sealing time of the glasses, thereby effectively improving the production efficiency of the vacuum glass.

Meanwhile, during the process of heating with short-wave infrared, since the surface stress of the over-tempered glass is lowered due to being heated again, the over-tempered glass is transformed into the tempered glass.

S150: evacuating
Bake and vacuumize the sealed gap between the two tempered glasses using an evacuating device to form the tempered vacuum glass, and then seal the pumping hole on the tempered vacuum glass.

Particularly, bake and pump the gap 3 of the tempered glasses which have been bonded together in the edge-sealing furnace, and then seal the pumping hole 5 in the tempered glass 4 by planar melting-sealing process. The sealing surface of the sealed pumping hole 5 is lower than the exterior surface of the plate glass 4.

In the prior art, the sealing part of glass tube looks like a "tail" on the outer side surface of a vacuum flask. For convenience of melting of glass tube and bonding with the plate glass, almost all the glass tubes are higher than the surface of the plate glass by about 1 centimeter, and then a metal protection cap is added on it for protection.

The planar melting-sealing process in the present invention is as follows:
At a position close to the corner of the surface of the tempered glass 4, a pumping hole 5 is drilled inward, the pumping hole 5 is composed of a small hole and a large hole. First, the small hole is drilled through the thickness of the glass 4, which has the same diameter as the glass tube, and then a large hole is socket drilled based on the small hole, which is not drilled through the glass 4 but stopped at about the 2/3 thickness of the glass 4. The diameter of the large hole is slightly larger than that of the small hole. Then the glass tube is buried in the small hole with its end in the large hole. The sealed upper end surface of the pumping hole 5 (sealed hole 8, refer to Fig. 3) is lower than the upper planar surface of the glass 4.

The melting of the end of the glass tube is customary technical means, which is omitted here for clearness of description of the embodiment.

In the prior art, the sealing of the glass tube is to heat seal the glass tube with focused infrared, and its sealed glass tube protrudes above the surface of the glass, which needs a protection cap for protection, and this kind of sealing is more likely to break during the installation and transportation of the glass and the protection cap is quite visible. In contrast, the planar melting-sealing in the present invention employs glass plate or metal plate of circle, square or other shapes to seal, so that the surface of the glass with no projections and provides a better visual effect. And side edge hole sealing may also be applied in the present invention, that is, the pumping tube is arranged on the side edge of the glass and thus hidden in the window frame after installation, which is beneficial to protection of the pumping tube and visual effect.

It can be seen from the above description of the embodiments, the two plate glasses 4 and 7, which constitute the vacuum glass, each need to be over-tempered before bonding. In the past, since the glass powder used for sealing has a high melting temperature of 450°C or more, if the vacuum glass is tempered directly, the tempering temperature is required to be higher than 600°C, which means the sealed glass powder may undesirably melt again at this high temperature, and if the individual glasses 4 and 7 are tempered first before bonding, the annealing temperature of the tempering is about 400°C, which means the glass having been tempered may anneal again when melting sealing is performed with the glass powder. This dilemma can be solved with the newly lead-free glass powder which contains material that absorbs short-wave infrared and has a low melting temperature of about 350°C. The toughening degree of the two tempered glasses 4 and 7 can be still kept after melting sealing with the lead-free low-melting glass powder which contains material that absorbs short-wave infrared.

The method for manufacturing tempered vacuum glass according to the present invention has been illustrated in the form of examples in the above with reference to the attached drawings. However, it should be understood for those skilled in the art that various modifications and improvements can be made in the method of manufacturing the tempered vacuum glass herein without departing from the spirit and scope of the present invention. Therefore, the protection scope of the present invention should be defined by the appended claims.

## Claims

1. A method for manufacturing a tempered vacuum glass, comprising following steps:
1) providing supporting points: forming supporting points on a surface of a plate glass by printing or dispensing process, and curing the supporting points;
2) over-tempering plate glasses: after the supporting points are provided, transferring plate glasses into a continuous tempering furnace for an over-tempering process, so as to form over-tempered glasses;
3) bonding: bonding an over-tempered glass provided with no supporting point but with a pumping hole to a surface of another over-tempered glass on which surface the supporting points are provided;
4) sealing: coating all side edges of a gap between two over-tempered glasses mentioned-above, which are combined with each other, with lead-free low-melting glass powder which contains material that absorbs short-wave infrared, and thereafter, transferring the two over-tempered glasses into an edge-sealing furnace to melt the lead-free low-melting glass powder by short-wave infrared heating, so as to seal the gap between the two over-tempered glasses; meanwhile, in a process of the short-wave infrared heating, the two over-tempered glasses are transformed into tempered glasses;
5) evacuating: baking and vacuumizing a sealed gap between two said tempered glasses using an evacuating device to form the tempered vacuum glass, and then sealing the pumping hole on the tempered vacuum glass.

2. The method according to claim 1, wherein, during a process of the sealing,
the lead-free low-melting glass powder comprises zinc oxide of 22 mg/m³, bismuth oxide of 10 mg/m³, aluminium oxide of 10 mg/m³, and magnesium oxide of 10 mg/m³;
an expansion coefficient of the lead-free low-melting glass powder is in a range of 70~99, and a lowest melting temperature of the lead-free low-melting glass powder is 430°C.

3. The method according to claim 1, wherein, during a process of the sealing,
the lead-free low-melting glass powder is heated to 430°C by short-wave infrared heating, so as to melt the lead-free low-melting glass powder, and then, keep the temperature for 2 minutes.

4. The method according to claim 1, wherein, during a process of the evacuating, the pumping hole on the tempered vacuum glass is sealed through planar melting-sealing process; and
a sealing surface of the pumping hole is lower than an exterior surface of the tempered vacuum glass.

5. The method according to claim 1, wherein, during a process of the bonding,
at least one piece of evaporable getter is disposed at corners of the two over-tempered glasses combined with each other.

6. The method according to claim 5, wherein, the evaporable getter is an aluminium getter.
